# EUROPEAN PATENT APPLICATION

(11) **EP 2 640 084 A2**
(43) Date of publication of application: **18.09.2013**
(21) Application number: 13151606.4
(22) Date of filing: 17.01.2013
(51) Int. Cl.: H04N 21/8549, H04N 21/6587

(54) **Video distribution system, apparatus, method and medium for distributing time shifted content starting from a selected chapter**

(30) Priority: 14.03.2012 JP 2012057137
(71) Applicant: Kabushiki Kaisha Toshiba, Tokyo 105-8001 (JP)
(72) Inventor: Ohya, Yasuo, Tokyo, 105-8001 (JP)
(74) Representative: HOFFMANN EITLE

(57) **Abstract**

According to one embodiment, video distribution system includes live distributor (10) and time-shifted distributor (20). Live distributor (10) distributes live content by streaming. Time-shifted distributor (20) accumulates live content distributed by streaming, and redistributes video content from reproduction position requested by viewer. Time-shifted distributor (20) includes digest generator (20c), menu creator (20b) and distributor (20d). Digest generator (20c) divides video content from start time of streaming distribution to present time when streaming distribution is continuing into chapters, extracts representative frame from each of chapters, and generates digest movie including representative frame. Menu creator (20b) creates menu screen for selection of digest movie and presents menu screen to viewer. Distributor (20d) distributes digest movie selected on presented menu screen to viewer.

## Description

### FIELD

Embodiments described herein relate generally to a video distribution system, a video distribution apparatus, a video distribution method and a program for distributing, for example, video content to an unidentified number of viewers in Internet protocol (IP) packets.

### BACKGROUND

Services of distributing video content via an IP network are common. Video content includes live video content distributed by so-called live streaming and other video content. The other video content can be viewed from the beginning by a technique such as Internet Protocol video on demand (IP-VOD). However, generally, live video content can be viewed only from the time when reproduction is started.

For example, in the case of live streaming of a game (for example, soccer), if a viewer starts viewing after the first half of the game has finished, the viewer can view only the second half of the game, and may be dissatisfied, especially if one of the highlights of the game is in the first half.

Distribution services which enable viewing by going back in time even during live streaming are known. This type of function is called time-shifted function distribution or a startover function.

By using the startover function, a viewer can view from the beginning of the game even during the middle of the game. However, since the game is ongoing, many viewers wish to catch up with the present scene and then view in real time. By requesting a service provider to fast-forward content, distributed video content can be reproduced at high speed.

However, if the existing technique is used, a highlight may be skipped by fast-forward, causing viewers to be dissatisfied.

The purpose is to provide a video distribution system, a video distribution apparatus, a video distribution method, and a medium, which prevents skipping a highlight even when video content is reproduced at high speed.

### BRIEF DESCRIPTION OF THE DRAWINGS

FIG. 1 shows an example of a video distribution system according to an embodiment;
FIG. 2 is a functional block diagram showing an example of the startover distribution server 20 shown in FIG. 1;
FIG. 3 is an illustration of a startover function; and
FIG. 4 shows an example of the processing procedure performed by the startover distribution server 20.

### DETAILED DESCRIPTION

In general, according to one embodiment, a video distribution system includes a live distribution server and a time-shifted distribution server. The live distribution server distributes live content by streaming. The time-shifted distribution server accumulates the live content distributed by streaming, and redistributes the accumulated video content from a reproduction position requested by a viewer. The time-shifted distribution server includes a digest generator, a menu creator and a distributor. The digest generator divides video content from a start time of the distribution by streaming to a present time when the distribution by streaming is continuing into a plurality of chapters, extracts a representative frame from each of the chapters, and generates a digest movie including the representative frame. The menu creator creates a menu screen for selection of the digest movie and presents the menu screen to the viewer. The distributor distributes the digest movie selected on the presented menu screen to the viewer.

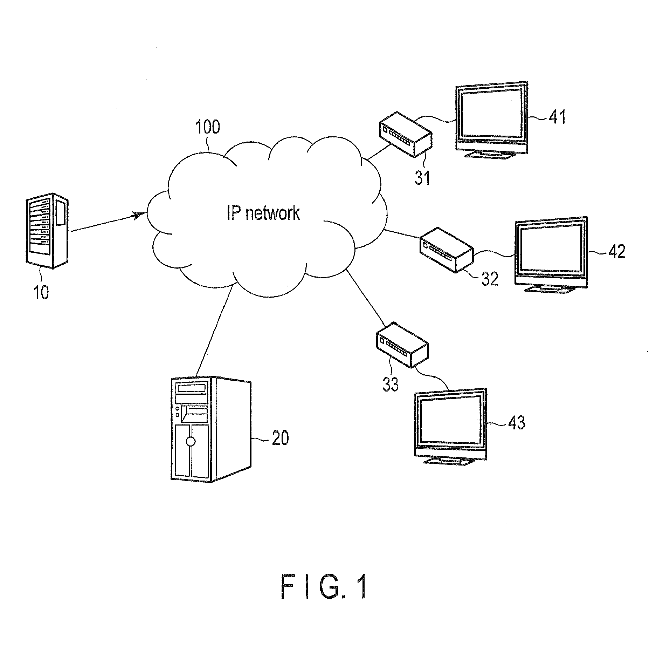

FIG. 1 shows an example of a video distribution system according to an embodiment. In this embodiment, live streaming, which distributes live video, and startover, which distributes video for time-shifted viewing, are supposed.

The system shown in FIG. 1 comprises a live distribution server 10, a startover distribution server 20 and viewing terminals 41-43, which are all connected to an Internet protocol (IP) network 100. The viewing terminals 41-43 are connected to the IP network 100 via, for example, respective set-top boxes (STBs) 31-33 functioning as interfaces.

In response to a viewer's request, the live distribution server 10 transmits to the IP network 100 a (transport) stream packet (i.e., an IP packet) including live video.

The IP packet is distributed via the IP network 100 by streaming based on, for example, a real-time transport protocol (RTP) and received by the STBs 31-33. The STBs 31-33 transcribe video and audio from the received IP packet, and reproduce the video and audio at the viewing terminals 41-43.

The startover distribution server 20 accumulates video content transmitted from the live distribution server 10 (hereinafter referred to as "original video content"). The startover distribution server 20 redistributes video content from the reproduction position requested by a viewer, thereby enabling time-shifted viewing of live video.

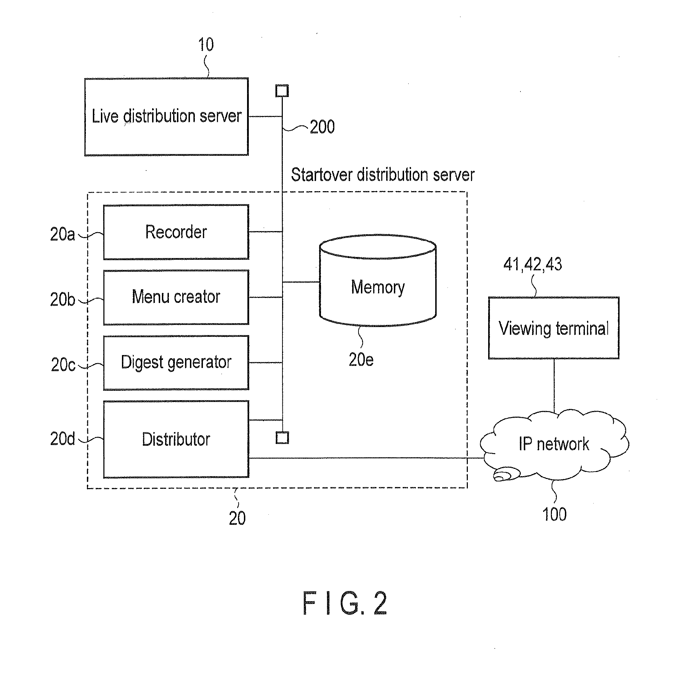

FIG. 2 is a functional block diagram showing an example of the startover distribution server 20 shown in FIG. 1. Unlike FIG. 1, which shows the embodiment in which the startover distribution server 20 is connected to the live distribution server 10 via the IP network 100, FIG. 2 shows an embodiment in which the startover distribution server 20 is connected to the live distribution server 10 via a local area network (LAN) 200. However, the function of the startover distribution server 20 and that of the live distribution server 10 may be implemented in the same computer.

Further, the function of the startover distribution server 20 may be implemented in a so-called cloud computing system, which comprises at least one server and at least one database.

Hereinafter, viewing at viewing terminal 41 will be described as an example. The same description applies to viewing terminals 42, 43.

In FIG. 2, the startover distribution server 20 comprises a recorder 20a, a menu creator 20b, a digest generator 20c, a distributor 20d, and a memory 20e as processing functions.

The recorder 20a, menu creator 20b, digest generator 20c, and distributor 20d are realized, for example, as programs executed by the startover distribution server 20, which is a computer.

The programs may be executed by a stand-alone computer. Alternatively, the programs may be executed by a system including a plurality of computers. Further, the functions of the programs may be understood as services provided by a cloud computing system.

The recorder 20a obtains original video content transmitted from the live distribution server 10. The obtained original video content is stored in the memory 20e. In addition to the original video content obtained from the recorder 20a, the memory 20e stores information and video content generated by the digest generator 20c and a menu screen created by the menu creator 20b.

The memory 20e may be realized as a memory included in, for example, a hard disk drive (HDD), a solid-state drive (SSD) or another computer (server). The memory 20e may also be realized as a storage device included in a data center or a database of a cloud computing system.

The digest generator 20c divides the original video content obtained from the live distribution server 10 into a plurality of chapters. The divided video content is that from the start time of streaming distribution to the present time when streaming distribution is continuing.

The original video content is divided into a plurality of chapters which are sets of similar scenes on the basis of the result of analysis of characteristics of video or audio, or divided into chapters on the basis of a predetermined period or a predetermined number of frames. The timestamp of each chapter of the original video content is stored in the memory 20e.

The digest generator 20c extracts a representative frame from each chapter. The digest generator 20c sets video in the period (for example, five seconds) before and after the representative frame as a digest scene (digest movie). The timestamp of the representative frame and the timestamps of the start and end of the digest scene are stored in the memory 20e. The digest scene includes one or more highlight.

The menu creator 20b creates a menu screen for selecting and designating a digest movie, and transmits it to the viewing terminal 41, whereby the menu screen is presented to a viewer. The menu screen shows, for example, chapters created before a startover viewing request is received from the viewing terminal 41.

The list of chapters shown in the menu enables the viewer to select a chapter to start reproduction from or a digest scene to reproduce by using the viewing terminal 41.

The distributor 20d receives a startover viewing request from the viewing terminal 41. The distributor 20d reads data corresponding to the startover viewing request from the memory 20e, and distributes data to the viewing terminal 41, which originated the request. Accordingly, the distributor 20d distributes a digest movie selected on the menu screen presented to a viewer to the viewing terminal 41 of the viewer.

After the distributed digest movie catches up with the video content of the present time, the distributor 20d transparently distributes live content by streaming, thereby enabling a viewer who has finished viewing the digest scene to go on to view original video content in real time.

In the above configuration, the startover distribution server 20 divides original video content into chapters, extracts a representative frame, and generates a digest scene in parallel with recording of original video content.

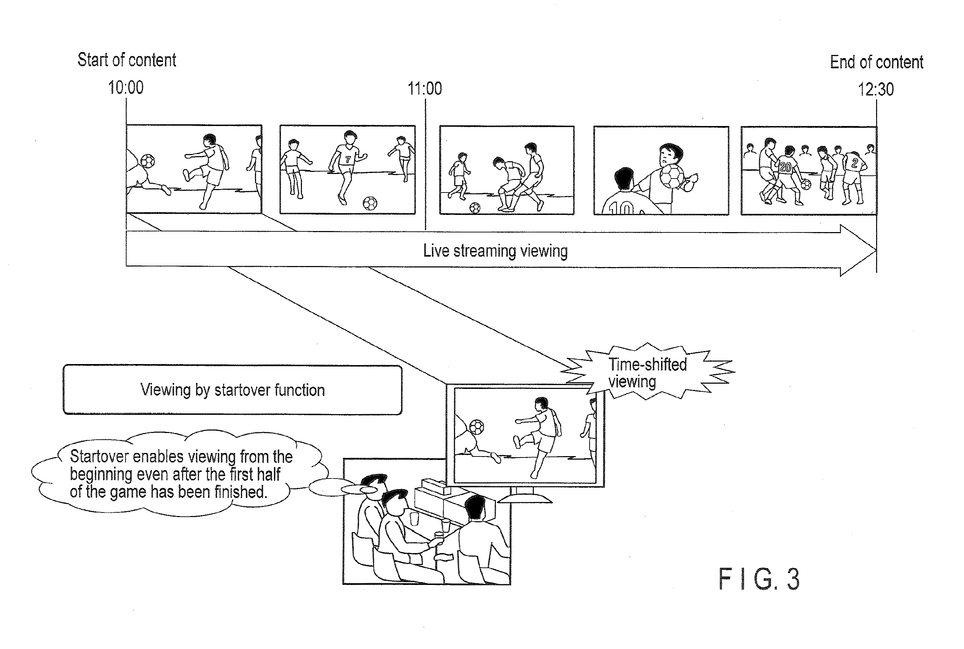

FIG. 3 is an illustration of the startover function. For example, let us assume that a soccer game is started at ten, and a viewer starts viewing from eleven. Since content is distributed by live streaming, the viewer normally views the game from halfway. However, use of the startover function enables the viewer to view the game from the beginning even though the first half of the game has finished.

For example, let us assume a viewer performs an operation of requesting startover viewing when the second half of the soccer game is started. The viewer can sequentially view digest scenes of the first half of the game following the order of digest scenes. Alternatively, the viewer can select any digest scenes for viewing.

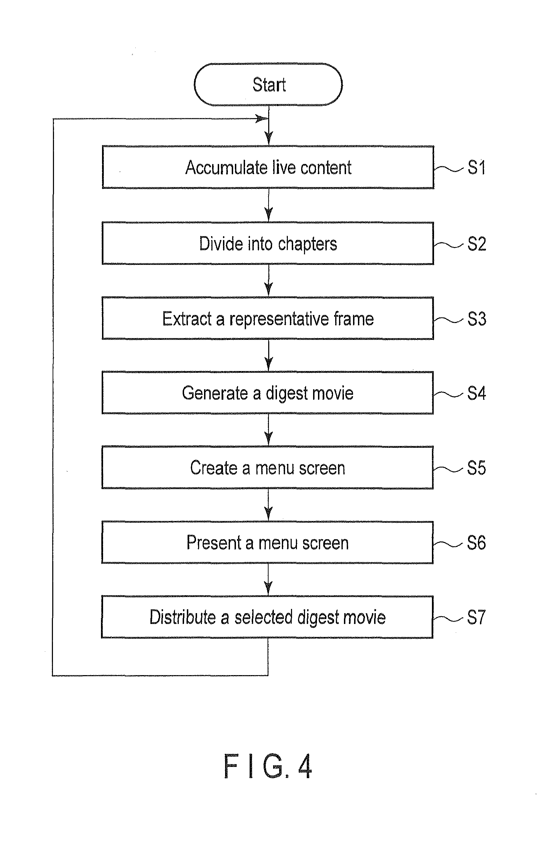

FIG. 4 shows an example of the processing procedure performed by the startover distribution server 20. The startover distribution server 20 obtains streaming data of live content distributed by the live distribution server 10 by streaming via the LAN 200 or IP network 100. The obtained data is accumulated in the memory 20e (step S1).

The startover distribution server 20 analyzes characteristics of video and audio of video content and divides the video content into a plurality of chapters (step S2).

Next, the startover distribution server 20 extracts a characteristic frame (representative frame) from each chapter (step S3). The startover distribution server 20 generates a digest movie including video before and after the representative frame as a representative scene (step S4).

Next, the startover distribution server 20 refers to divided positions of generated chapters and representative frame positions, and creates a menu screen showing currently-viewable chapters and their representative frame images (step S5). The menu screen is presented on the viewing terminal 41 (step S6). The menu screen is used by the viewer of the viewing terminal 41 to select a chapter from which the viewer wishes to start startover viewing.

If the original video content is still being distributed, the startover distribution server 20 creates a menu screen of the time when the startover viewing request is received. Namely, while the original video content is being distributed, the menu screen is successively updated, whereby menu items are sequentially added.

The startover distribution server 20 redistributes video of the original video content stored in the memory 20e from the start position of the selected chapter.

Alternatively, the startover distribution server 20 allows the viewer to select any chapter a digest scene of which the viewer wishes to view. The startover distribution server 20 starts reproduction of the original video content stored in the memory 20e on the basis of the start position information and end position information of the digest scene of the selected chapter (step S7).

The startover distribution server 20 can transmit both live streaming data under distribution and data for startover. Therefore, the viewer can view startover viewing video and live video on the same screen.

The digest movies after the selected chapter are sequentially reproduced. After reproduction of the digest scene of the final chapter is finished, the original video content being recorded is reproduced. Therefore, the viewer who has viewed the digest scenes can go on to view the original video content in real time. Namely, the viewer who has viewed the digest scenes can start viewing on the same time-base as a viewer who has been viewing the video content distributed by live streaming from the beginning.

As described above, according to the present embodiment, the live streaming distribution involving the startover function enables a viewer to view video content from the start point to the end point by digests. Namely, when performing time-shifted viewing by using the startover function, the viewer can view past content while selecting portions of the past content.

Consequently, the viewer can catch up with the present live video while viewing digest scenes, such as a goal shot in a soccer game or the like, and can view the end of the game at the same time as a viewer who has viewed the game in real time from the beginning. Since the live movie is reproduced by digests, the effect of reducing the possibility of missing a highlight can be expected. If a viewer notices a highlight, the viewer may perform an operation to switch from a digest reproduction mode to a normal reproduction mode.

The series of processes from the startover reproduction, division into chapters, generation of a digest movie to creation of a menu screen is performed by equipment on the network side. Therefore, a viewer need not have a dedicated device, such as a recording device, at home. Accordingly, the viewer can advantageously enjoy desired video viewing modes at low cost.

Since multimedia processing (such as division into chapters or generation of digest movies) deals with a large amount of data, much time is required for completing the processing if an embedded device or a home personal computer is used. The embedded device or home personal computer may not be able to process data sufficiently fast for the live streaming distribution supposed in the present embodiment, and a game may finish before a menu screen is provided to a viewer, which is meaningless.

In contrast, a dedicated server apparatus includes necessary functions in the present embodiment, and processing can be performed in good time for viewing in real time. It should be apparent that allowing a home apparatus to have such an operation speed directly leads to increase in cost.

The startover reproduction, division into chapters and generation of digest movies may be entrusted to and realized by a cloud computing system. This enables use of an enormous computer resource, and consequently enables addition of further value to services.

For example, it becomes possible to use an algorithm suitable for the type of content to extract representative frames, for example, to use a logic dedicated to soccer or a logic dedicated to baseball. This should enable extraction of representative frames with higher accuracy.

As described above, a video distribution system, a video distribution apparatus, a video distribution method and a medium, which prevent missing of a highlight even when video content is reproduced at high speed can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A video distribution system **characterized by** comprising:
a live distribution server (10) configured to distribute live content by streaming; and
a time-shifted distribution server (20) configured to accumulate the live content distributed by streaming, and redistribute the accumulated video content from a reproduction position requested by a viewer, the time-shifted distribution server (20) comprising:
a digest generator (20c);
a menu creator (20b); and
a distributor (20d), wherein
the digest generator (20c) is configured to divide video content from a start time of the distribution by streaming to a present time when the distribution by streaming is continuing into a plurality of chapters, extract a representative frame from each of the chapters, and generate a digest movie including the representative frame,
the menu creator (20b) is configured to create a menu screen for selection of the digest movie and presents the menu screen to the viewer, and
the distributor (20c) is configured to distribute the digest movie selected on the presented menu screen to the viewer.

2. The video distribution system of Claim 1, **characterized in that** after the distributed digest movie catches up with video content of the present time, the distributor (20d) transparently distributes the live content by streaming.

3. A video distribution apparatus (20) which accumulates live content distributed from a live distribution server by streaming, and redistributes the accumulated live content from a reproduction position requested by a viewer, the video distribution apparatus (20) **characterized by** comprising:
a digest generator (20c);
a menu creator (20b); and
a distributor (20d), wherein
the digest generator (20c) is configured to divide video content from a start time of the distribution by streaming to a present time when the distribution by streaming is continuing into a plurality of chapters, extract a representative frame from each of the chapters, and generate a digest movie including the representative frame,
the menu creator (20b) is configured to create a menu screen for selection of the digest movie and presents the menu screen to the viewer, and
the distributor (20d) is configured to distribute the digest movie selected on the presented menu screen to the viewer.

4. The video distribution apparatus of Claim 3, **characterized in that** after the distributed digest movie catches up with video content of the present time, the distributor (20d) transparently distributes the live content by streaming.

5. A video distribution method performed by a time-shifted distribution server (20) applied to a video distribution system comprising a live distribution server (10) for distributing live content by streaming, the method **characterized by** comprising:
accumulating (S1) the live content distributed by streaming;
dividing (S2) video content from a start time of the distribution by streaming to a present time when the distribution by streaming is continuing into a plurality of chapters;
extracting (S3) a representative frame from each of the chapters;
generating (S4) a digest movie including the representative frame;
creating (S5) a menu screen for selection of the digest movie;
presenting (S6) the menu screen to the viewer; and
distributing (S7) the digest movie selected on the presented menu screen to the viewer,
wherein at least one of the steps is performed by the time-shifted distribution server.

6. The video distribution method of Claim 5, **characterized in that** after the distributed digest movie catches up with video content of the present time, the time-shifted distribution server transparently distributes the live content by streaming.

7. A non-transitory computer-readable medium storing a program executed by a computer included in a video distribution system **characterized by** comprising a live distribution server for distributing live content by streaming, the program causing the computer to:
accumulate the live content distributed by streaming;
divide video content from a start time of the distribution by streaming to a present time when the distribution by streaming is continuing into a plurality of chapters;
extract a representative frame from each of the chapters;
generate a digest movie including the representative frame;
create a menu screen for selection of the digest movie;
present the menu screen to the viewer; and
distribute the digest movie selected on the presented menu screen to the viewer.

8. The medium of Claim 7, **characterized in that** the program further causes the computer to transparently distribute the live content by streaming after the distributed digest movie catches up with video content of the present time.
